(19) Europäisches Patentamt / European Patent Office / Office européen des brevets

(11) **EP 1 717 651 B1**

(12) **EUROPÄISCHE PATENTSCHRIFT**

(45) Veröffentlichungstag und Bekanntmachung des Hinweises auf die Patenterteilung:
**01.12.2010 Patentblatt 2010/48**

(51) Int Cl.:
***G05B 13/02*** *(2006.01)*

(21) Anmeldenummer: **06004424.5**

(22) Anmeldetag: **04.03.2006**

(54) **Verfahren und Vorrichtung zum Auswerten von Ereignissen aus dem Betrieb eines Fahrzeuges**

Method and system for analysing events related to operating a vehicle

Méthode et système d'analyse des événements relatés à l'opération d'un véhicule

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **26.04.2005 DE 102005019335**

(43) Veröffentlichungstag der Anmeldung:
**02.11.2006 Patentblatt 2006/44**

(73) Patentinhaber: **Volkswagen Aktiengesellschaft
38436 Wolfsburg (DE)**

(72) Erfinder:
• **Brose, Heino
39646 Oebisfelde (DE)**
• **Braitschnik, Peter
10777 Berlin (DE)**
• **Ligata, Edmir
13349 Berlin (DE)**

(74) Vertreter: **Brunotte, Joachim Wilhelm Eberhard
Bressel und Partner
Patentanwälte
Park Kolonnaden
Potsdamer Platz 10
10785 Berlin (DE)**

(56) Entgegenhaltungen:
**EP-A- 1 103 926          WO-A-2004/090691
US-A1- 2001 002 451     US-A1- 2004 073 844**

EP 1 717 651 B1

**Beschreibung**

Die Erfindung betrifft ein Verfahren und eine Vorrichtung zum Auswerten von Ereignissen, die beim Betrieb zumindest eines Fahrzeuges, insbesondere eines Straßen-Kraftfahrzeuges, ermittelt und/oder aufgezeichnet werden.

Beispielsweise weisen heutige Straßen-Kraftfahrzeuge eine Vielzahl von Steuergeräten auf, die einzelne Fahrzeugfunktionen steuern und/oder regeln. Die Steuergeräte sind z. B. über einen CAN-Bus miteinander verbunden. Im Falle eines für eine Diagnose der Fahrzeugfunktionen relevanten Ereignisses, insbesondere eines Funktionsfehlers, wird ein Eintrag in einen Ereignisspeicher vorgenommen. Bei den Ereignissen handelt es sich z. B. darum, dass ein Sensor kein Signal ausgibt, an einem Aktor ein elektrischer Kurzschluss besteht oder eine Signalleitung zwischen einer Einrichtung (z. B. Aktor) und einem Steuergerät unterbrochen ist.

Insbesondere ist es bekannt, dass die im Fahrzeug integrierten Diagnosefunktionalitäten die Fahrzeugfunktionen überwachen und Abweichungen vom Sollverhalten protokollieren. Die so entstandenen Daten werden in den Werkstätten aus dem Fahrzeug ausgelesen und von Servicemitarbeitern mit Hilfe leistungsfähiger Diagnoseanwendungen analysiert.

Die Erfindung betrifft insbesondere derartige Systeme mit einem Ereignisspeicher, wobei der Speicher auch aus mehreren Teil-Speichern bestehen kann. Dabei ist die Erfindung nicht auf eine Anordnung mit über CAN-Bus verbundenen Steuergeräten beschränkt, sondern betrifft vielmehr alle Systeme mit einer Vielzahl von Fahrzeugfunktionen, für die zur Diagnose des Betriebs (einschließlich Planung und Entwicklung von neuen Fahrzeugfunktionen oder Systemen) Ereignisse ermittelt und/oder gespeichert werden.

Die Anzahl und Verteilung von elektrischen und/oder elektronischen Einrichtungen und die damit verbundenen Fahrzeugfunktionen in Kraftfahrzeugen haben in den letzten Jahren deutlich zugenommen. Dadurch wurde die Komplexität bei der Diagnose deutlich erhöht. Bei einer möglichen Störung im System gestaltet sich die Suche nach der Ursache umso schwieriger und zeitaufwändiger. Da der im Fahrzeug verbaute Speicher sehr teuer ist, sind die im Fahrzeug vorhandenen Speicherressourcen begrenzt. In Folge dessen werden die Daten beim Speichern komprimiert. Dabei gehen wichtige Informationen, wie die Historie der Ereignisse verloren und stehen somit bei der späteren Analyse (Diagnose) nicht mehr zur Verfügung.

Jede Diagnose in der Werkstatt wird als abgeschlossene Einheit betrachtet. Dies hat zur Folge, dass auf die Daten und das Wissen der vorhergehenden Diagnosen des gleichen Fahrzeugs oder Fahrzeuge der gleichen Fahrzeugserie nicht unmittelbar zurückgegriffen wird. Diese Daten werden nur durch die Erfahrungen des Servicemitarbeiters in die Durchführung der aktuellen Problemanalyse eingebracht.

US 2001/0002451 A1 beschreibt ein Steuersystem und ein Verfahren zum Steuern eines Teils eines Fahrzeuges, in dem Sensorsysteme an verschiedenen Orten in dem Fahrzeug montiert sind. Jedes Sensorsystem stellt in Bezug auf einen Zustand des Sensorsystems eine Messung bereit oder eine Messung in Bezug auf einen Zustand des Montageortes. Um ein Komponenten-Diagnosesystem zum Diagnostizieren der Komponenten zu implementieren, wobei die Komponenten eine Mehrzahl von Sensoren nutzen, die nicht direkt der Komponente zugeordnet sind, d.h. von der Komponente unabhängig sind, wird eine Reihe von Test durchgeführt. Für jeden Test wird das von den Sensoren empfangene Signal in einen Muster-Erkennungs-Trainingsalgorithmus eingegeben, mit einer Anzeige, ob die Komponente normal oder abnormal arbeitet. Dabei wird die Komponente absichtlich verändert, um für einen abnormalen Betrieb zu sorgen. Die Daten von dem Test werden dazu genutzt, den Muster-Erkennungs-Algorithmus zu erzeugen, z.B. ein neuronales Netz, so dass die Daten von den Sensoren beim Betrieb in den Algorithmus eingegeben werden und der Algorithmus eine Anzeige einer abnormalen oder normalen Arbeitsweise der Komponente bereitstellt.

Es ist eine Aufgabe der vorliegenden Erfindung, ein Verfahren und eine Anordnung anzugeben, mit denen sich der Diagnoseaufwand reduzieren lässt. Insbesondere soll der Aufwand für eine Behebung eines Fehlers in dem Fahrzeug-System reduziert werden können.

Als eine Lösung für die gestellten Anforderungen wird die Nutzung von neuronalen Netzen vorgeschlagen. Sie sind in der Lage selbständig zu lernen und besitzen ein Erinnerungsvermögen. Damit können Zusammenhänge zwischen verschiedenen Ereignissen hergestellt werden. Insbesondere kann dadurch Mehraufwand bei der Fehlerbehebung vermieden werden, der durch die falsche Annahme entsteht, dass die verschiedenen Ereignisse unterschiedliche Ursachen haben. Mit der erfindungsgemäßen Lösung kann ein Folgefehler einer bestimmten Fehlerursache, der beispielsweise in einem anderen Teilsystem des Fahrzeuges als ein erster Fehler auftritt, als Folgefehler erkannt werden. Dem liegt die Erkenntnis zu Grunde, dass in zunehmend vernetzten und im Fahrzeug verteilten Teilsystemen häufig solche Folgefehler auftreten können. Würde ohne eine solche Detektion des Folgefehlers zunächst versucht, das Teilsystem des Folgefehlers zu reparieren, entstünde unnötiger Aufwand.

Insbesondere können während des Betriebes des Fahrzeugs ermittelte (insbesondere in einem Ereignisspeicher abgespeicherte) Ereignisse in Ereigniscluster eingeteilt werden, wobei die dem jeweiligen Ereigniscluster angehörenden Ereignisse möglicherweise und/oder mit einer Mindest-Wahrscheinlichkeit eine gemeinsame Ursache haben.

Insbesondere wird folgende Ausgestaltung eines Verfahrens zum Auswerten von Ereignissen vorgeschlagen, wobei die Ereignisse beim Betrieb zumindest eines Fahrzeuges, insbesondere eines Straßen-Kraftfahrzeuges, ermittelt und/oder aufgezeichnet werden:

Eine Vielzahl der Ereignisse wird ermittelt, wobei die Ereignisse von unterschiedlicher Art sind. Durch Auswertung von Informationen über eine Historie der Ereignisse wird zumindest ein Ereigniscluster ermittelt, wobei das Ereigniscluster eine Mehrzahl der Ereignisse und/oder eine Mehrzahl der Ereignis-Arten enthält und wobei auf Grund der Auswertung eine Vermutung besteht, dass die dem jeweiligen Ereigniscluster angehörenden Ereignisse und/oder Ereignis-Arten eine gemeinsame Ursache haben.

Der Begriff "Ermittlung" schließt mit ein, dass die Ereignisse oder ein Teil der Ereignisse aus einem Ereignisspeicher ausgelesen werden.

Unter derselben Art von Ereignissen (oder "Ereignis-Art") wird verstanden, dass "dasselbe" Ereignis (z. B. ein bestimmter Fehler bei der Steuerung einer Fahrzeugfunktion oder die Feststellung, dass ein bestimmter Messwert nicht plausibel ist) mehrfach zeitlich nacheinander auftreten kann. Da das Ereignis aber nicht zu demselben Zeitpunkt mehrfach auftritt, ist es nicht dasselbe Ereignis, sondern gehört nur zu derselben Art von Ereignissen. Dieselbe Art von Ereignissen ist insbesondere dadurch definiert, dass die Ereignisse zwingend durch dieselbe Fehlerursache ausgelöst werden. Allerdings sind umgekehrt nicht alle auf Grund derselben Fehlerursache auftretenden Ereignisse von gleicher Art. Vielmehr kann gerade in komplexen Systemen eine Fehlerursache mehrere verschiedenartige Ereignisse bewirken.

Insbesondere kann die Vermutung der gemeinsamen Ursache objektiv durch eine Wahrscheinlichkeit ausgedrückt werden. Vorzugsweise werden Wahrscheinlichkeiten für unterschiedliche Kombinationen von Ereignis-Arten, die in einem gemeinsamen Ereigniscluster enthalten sind, bestimmt. Die verschiedenen Wahrscheinlichkeiten können dann verglichen werden und es kann auf dieser Grundlage entschieden werden, welche Ereignis-Arten eine gemeinsame Fehlerursache haben.

Die Berücksichtigung der Historie erlaubt es, allein auf dieser Grundlage die Zusammenhänge zwischen den Ereignissen und/oder Ereignis-Arten festzustellen. Ein besonderer Vorteil liegt darin, dass kein zusätzliches Wissen über technische Zusammenhänge der Fahrzeugfunktionen erforderlich ist. Die Bildung des oder der Ereigniscluster kann ausschließlich unter Berücksichtigung der Historie erfolgen.

Die Historie kann insbesondere dadurch ausgewertet werden, dass Ereignisse zu Ereignisgruppen gruppiert werden, wobei die Ereignisgruppen jeweils ein oder mehrere Ereignisse aufweisen, die zeitlich, oder bezüglich einer anderen in Zeitrichtung geordneten Skala, näher beieinander aufgetreten sind als andere Kombinationen von Ereignissen. Aus den Ereignisgruppen können dann das oder die Ereigniscluster ermittelt werden.

Insbesondere ist es möglich, das oder die Ereigniscluster wiederholt zu ermitteln. Beispielsweise können immer wieder weitere (z. B. neu hinzugekommene) Ereignisgruppen ausgewertet werden und das oder die Ereigniscluster entsprechend verändert werden. Mit zunehmender Anzahl der berücksichtigten Ereignisgruppen nimmt die Zuverlässigkeit des Ergebnisses zu. Insbesondere werden jeweils die Ereignisse, die beim Betrieb einer Mehrzahl von Fahrzeugen ermittelt werden, bei der Ermittlung des oder der Ereigniscluster berücksichtigt. Es wird insbesondere ein Verfahren auf Basis zumindest eines neuronalen Netzes vorgeschlagen, welches eine automatisierte Wiederverwendung von Diagnoseergebnissen früherer Diagnosen für eine aktuelle Diagnose ermöglicht.

Das Verfahren kann durch eine im Fahrzeug angeordnete Einrichtung ("Fahrzeug-Modul") zur Bildung der Ereigniscluster und/oder durch eine außerhalb des Fahrzeugs ("Server-Modul", beispielsweise in einer Werkstatt) angeordnete Einrichtung zur Bildung der Ereigniscluster ausgeführt werden. Das Server-Modul erlaubt es insbesondere, die Ereigniscluster von verschiedenen Fahrzeugen einer Fahrzeugserie auszuwerten.

Die Auswertung einer gesamten Fahrzeug-Flotte von gleichartigen Fahrzeugen erfolgt beispielsweise durch Vernetzung (z. B. über das Internet) der Serviceeinrichtungen, von denen die Ereignisse beim Betrieb der einzelnen Fahrzeuge ermittelt werden. Nach der Auswertung kann das Ergebnis an die einzelnen Serviceeinrichtungen übertragen werden, sodass beispielsweise in Werkstätten die Information über Ereignis-Zusammenhänge für die gesamte Fahrzeug-Flotte zur Verfügung steht.

Bei der Zeitachse, die bei der Auswertung verwendet wird, kann es sich um eine nicht lineare Zeitachse handeln. Z. B. kann an Stelle der Zeit auch die Gesamt-Fahrstrecke eines Fahrzeugs verwendet werden (z. B. km-Stand), die das Fahrzeug seit Inbetriebnahme oder seit einem späteren Referenzereignis (z. B. Motorwechsel) zurückgelegt hat. Auch eine solche "km-Achse" oder eine andere Achse, die es ermöglicht, eine zeitliche Reihenfolge der aufgetretenen Ereignisse unter Bezugnahme auf die Achse zu erstellen, wird als Zeitachse bezeichnet. Eine solche Zeitachse ist mit der oben genannten "Skala" gemeint.

Wie oben bereits erwähnt, kann das Ereigniscluster oder können die Ereigniscluster unter Verwendung eines neuronalen Netzes ermittelt werden. Unter einem neuronalen Netz wird insbesondere eine in Software und/oder Hardware implementierte Anordnung verstanden, in der (in Analogie zu neuronalen Systemen von Lebewesen) "Neuronen" über Signalverbindungen und/oder logische Verknüpfungen miteinander vernetzt sind. Dabei können Neuronen auch mit sich selbst verknüpft sein.

Ausgestaltungen eines neuronalen Netzes sind für andere Zwecke bekannt und z. B. in "Simulation Neuronaler Netze" von Prof. Dr. Andreas Zell, Addison-Wesley, Sept. 1994, ISBN 3-89319-554-8 beschrieben.

Vorzugsweise werden die Ereignisse (einschließlich von Zusatzinformationen über die Historie der Ereignisse) bei der Auswertung zunächst einer Vorverarbeitung unterzogen und wird ein Ergebnis der Vorbearbeitung durch das neuronale Netz weiterverarbeitet. Zu der Vorverarbeitung gehören zum Beispiel die Zuordnung der Auftritts-Zeitpunkte der Ereignisse zu den Ereignissen und/oder die erwähnte Gruppierung.

Jede Ereignis-Art in dem neuronalen Netz ist durch ein Neuron repräsentiert. Außerdem werden vorzugsweise jeweils Gewichte eines Paars von Neuronen definiert, die eine Wahrscheinlichkeit für eine gemeinsame Ursache der beiden Ereignis-Arten ausdrücken, wobei die Gewichte bei der Auswertung der Historie der Ereignisse angepasst werden, wenn Ereignisse der beiden Ereignis-Arten zeitlich nahe beieinander aufgetreten sind. Bei der Verarbeitung in dem neuronalen Netz ist in diesem Fall für jedes beliebige Paar von Ereignis-Arten, die tatsächlich bei einer Menge von auszuwertenden Ereignissen vorkommen, ein zugeordnetes Gewicht definiert. Darüber hinaus können noch Gewichte für eine Verknüpfung der Neuronen jeweils mit sich selbst definiert sein. Diese Gewichte drücken insbesondere die Wahrscheinlichkeit aus, dass das Neuron (d. h. die Ereignis-Art) keine gemeinsame Fehlerursache mit irgendeinem anderen Neuron hat.

Durch eine Auswertung der Gewichte einer Mehrzahl der oder aller Neuronen-Paare und Neuronen können Gesamt-Wahrscheinlichkeiten für entsprechende Ereigniscluster berechnet werden. Im einfachsten Fall wird dabei lediglich die Summe aller Gewichte der Neuronen-Paare in dem Ereigniscluster berechnet, wobei die Summe noch normiert wird (z. B. auf die Anzahl der beteiligten Paare bezogen wird). Es sind jedoch auch andere Verfahren zum Berechnen der Gesamt-Wahrscheinlichkeit möglich.

Das erfindungsgemäße Verfahren kann insbesondere durch Computer-Software und/oder - Hardware implementiert werden. Die Bildung der Ereigniscluster kann insbesondere in diesem Fall vollautomatisch erfolgen. Dementsprechend sind auch eine Software, eine Software- /Hardware-Kombination und eine Hardware Teil der Erfindung, die ausgestaltet sind, das erfindungsgemäße Verfahren in einer seiner Ausgestaltungen auszuführen. Im Fall der Software (Computerprogramm) wird das Verfahren ausgeführt, wenn das Computerprogramm auf einem Computer oder Computer-Netzwerk abläuft. Bei Hardware oder einer Software-/Hardware-Kombination können z. B. speziell für die Ausführung des Verfahrens ausgestaltete Hardware-Komponenten wie ein FPGA (Field Programmable Gate Array) verwendet werden.

Programmcode-Mittel der Software können auf einem computerlesbaren Datenträger gespeichert sein. In diesem Fall gehört auch der Datenträger zum Umfang der Erfindung. Auf dem Datenträger kann eine Datenstruktur gespeichert sein, die nach einem Laden in einen Arbeits- und/oder Hauptspeicher eines Computers oder Computer-Netzwerkes das erfindungsgemäße Verfahren in einer seiner Ausgestaltungen ausführen kann.

Auch gehört zum Umfang der Erfindung ein Computerprogramm-Produkt mit auf einem maschinenlesbaren Träger gespeicherten Programmcode-Mittein, um das erfindungsgemäße Verfahren in einer seiner Ausgestaltungen durchzuführen, wenn das Programm auf einem Computer oder Computer-Netzwerk ausgeführt wird. Dabei wird unter einem Computer-Programmprodukt das Programm als handelbares Produkt verstanden. Es kann grundsätzlich in beliebiger Form vorliegen, so zum Beispiel auf Papier oder einem computerlesbaren Datenträger und kann insbesondere über ein Datenübertragungsnetz verteilt werden.

Die Erfindung betrifft auch eine Anordnung zum Auswerten von Ereignissen, die beim Betrieb zumindest eines Fahrzeuges, insbesondere eines Straßen-Kraftfahrzeuges, ermittelt werden, wobei die Anordnung Folgendes aufweist:

- eine Ermittlungseinrichtung zur Ermittlung einer Vielzahl der Ereignisse, wobei die Ereignisse von unterschiedlicher Art sein können,
- eine Auswertungseinrichtung, die ausgestaltet ist, durch Auswertung von Informationen über eine Historie der Ereignisse zumindest ein Ereigniscluster zu ermitteln, wobei das Ereigniscluster eine Mehrzahl der Ereignisse und/ oder eine Mehrzahl der Ereignis-Arten enthält und wobei auf Grund der Auswertung eine Vermutung besteht, dass die dem jeweiligen Ereigniscluster angehörenden Ereignisse und/oder Ereignis-Arten eine gemeinsame Ursache haben.

Die Ermittlungseinrichtung kann mit einem Ereignisspeicher verbunden sein, in dem die Ereignisse und Zusatzinformationen über die Historie speicherbar sind.

Im Folgenden wird die Erfindung anhand von Ausführungsbeispielen näher erläutert, die in den Figuren schematisch dargestellt sind. Die Erfindung ist jedoch nicht auf die Beispiele beschränkt. Gleiche Bezugszeichen in den einzelnen Figuren bezeichnen dabei gleiche oder funktionsgleiche bzw. hinsichtlich ihrer Funktionen einander entsprechende Elemente. Im Einzelnen zeigen:

Fig. 1    eine Fahrzeugstruktur mit Steuergeräten, einem Daten-Bussystem und einem Ereignisspeicher,

Fig. 2    eine Struktur zur Gruppierung von Ereignissen, die gegebenenfalls mit Ausnahme des Ereignisspeicher durch Software implementiert werden kann,

Fig. 3    verdeutlicht das Prinzip eines bevorzugten Ausführungsbeispiels der vorliegenden Erfindung,

Fig. 4    Vektoren als Eingangsinformationen für ein neuronales Netz,

EP 1 717 651 B1

Fig. 5        ein normales Netz und Ausgangsinformationen,

Fig. 6        die Berücksichtigung einer Ereignis-Art in einem neuronalen Netz,

Fig. 7A      ein neuronales Netz für vier aufgetretene Ereignis-Arten,

Fig. 7B      das neuronale Netz gemäß Fig. 7A mit veränderten Gewichten,

Fig. 8        in einem Ereignisspeicher gespeicherte Informationen,

Fig. 9        Schritte bei der Aufbereitung und Gruppierung von Ereignissen und

Fig. 10      gruppierte Ereignisse und ein zugehöriger Zeitstempel.

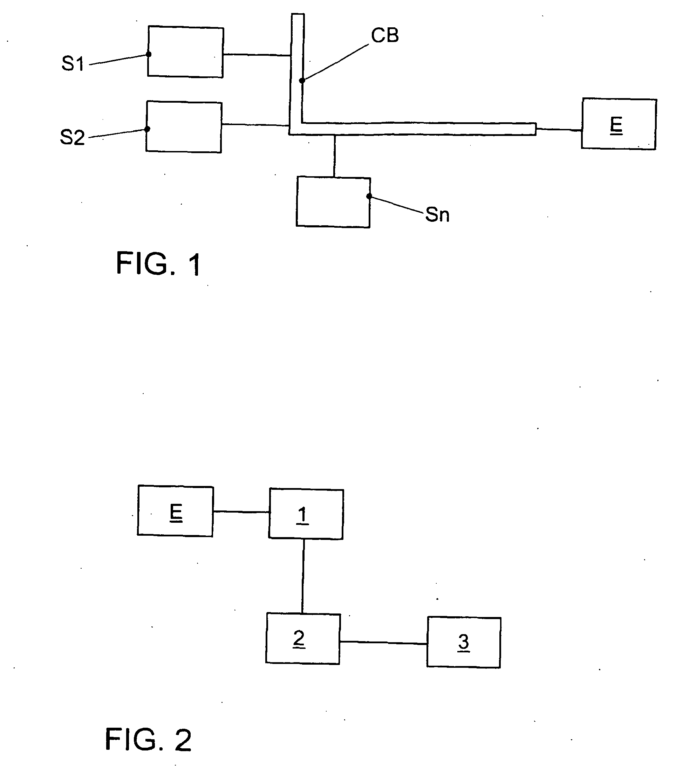

In dem im Folgenden dargestellten Ausführungsbeispiel sind Ausgangspunkt der Auswertung von Ereignissen Einträge in Ereignisspeichern E. Die Einträge werden beispielsweise von Steuergeräten S1, S2, ... Sn bewirkt, die Fahrzeugfunktionen steuern. Die Steuergeräte sind z. B. über einen CAN-Bus CB mit dem jeweiligen Ereignisspeicher verbunden (Fig. 1). Bei dem Ereignisspeicher E kann es sich um ein System mit einer Vielzahl von in dem Fahrzeug verteilten Speichern handeln, die jedoch gemeinsam und/oder nacheinander ausgelesen werden können.

Die in Fig. 2 dargestellte Anordnung weist eine Ermittlungseinrichtung 1 zur Ermittlung von Ereignissen und zugeordneten Zusatzinformationen auf. Die Ermittlungseinrichtung 1 ist mit einem Ereignisspeicher E verbunden. Wiederum mit der Ermittlungseinrichtung 1 ist eine Auswertungseinrichtung 2 zur Auswertung der Zusatzinformationen verbunden. Eine Einrichtung 3, die mit der Auswertungseinrichtung 2 und optional mit der Ermittlungseinrichtung 1 verbunden ist, teilt die Ereignisse unter Berücksichtigung der von der Auswertungseinrichtung 2 erhaltenen Auswertungsinformation in Ereigniscluster ein und berechnet zugeordnete Wahrscheinlichkeiten. Die Einrichtung 3 weist vorzugsweise ein neuronales Netz auf. Die Einrichtungen 1 bis 3 können durch Software und/oder Hardware implementiert sein.

Die Einrichtung 3 kann mehrfach vorhanden sein, z. B. als Fahrzeug-Modul jeweils in Fahrzeugen und als (gegebenenfalls über verschiedene Serviceeinrichtungen verteiltes) Server-Modul außerhalb von Fahrzeugen, beispielsweise in Werkstätten. Die Strukturen von neuronalen Netzen, die jeweils in einer solchen Einrichtung implementiert sind, können identisch sein. Auf diese Weise ist es möglich, die Parameter (z. B. die Bedeutung und Anzahl der Neuronen und die aktuellen Werte der Gewichte, s.o.) des neuronalen Netzes auszutauschen. Eine andere Einrichtung 3 kann dann ausgehend von den Parameterwerten und auf der Basis von zusätzlich auszuwertenden Ereignissen aktualisierte Ereigniscluster und deren Wahrscheinlichkeiten berechnen.

In dem Ausführungsbeispiel werden Einträge in dem Ereignisspeicher verwendet. Das Server-Modul weist ein neuronalen Netz, welches für die Clusteranalyse einer Fahrzeugserie zuständig ist. Das neuronale Netz auf dem Server-Modul berücksichtigt die Ergebnisse der neuronalen Netze einzelner Fahrzeuge einer Fahrzeugserie, indem es die Gewichte der neuronalen Netze der einzelnen Fahrzeuge integriert. Diese integrierten Gewichte werden von mit dem Server-Modul verbundenen Diagnosegeräten z. B. aus den Werkstätten zum Server-Modul übertragen Auf diese Weise lernt das neuronale Netz des Server-Moduls und wächst dabei stetig (da neue Ereignis-Arten hinzukommen). Es entsteht ein neuronales Netz, welches in der Lage ist die Ereignis-Cluster einer Fahrzeugserie zu ermitteln.

Bei der Auswertung funktioniert das neuronale Netz des Server-Moduls wie das neuronale Netz des Fahrzeug-Moduls. Beide geben als Ergebnis eine Wahrscheinlichkeitstabelle aus. Die Tabellen unterscheiden sich in der Hinsicht, dass die Tabelle des neuronalen Netzes auf dem Server-Modul die Wahrscheinlichkeiten der Ereigniscluster einer Fahrzeugserie darstellt und die Tabelle des neuronalen Netzes auf dem Fahrzeug-Modul die Wahrscheinlichkeiten der Ereigniscluster eines Fahrzeugs darstellt.

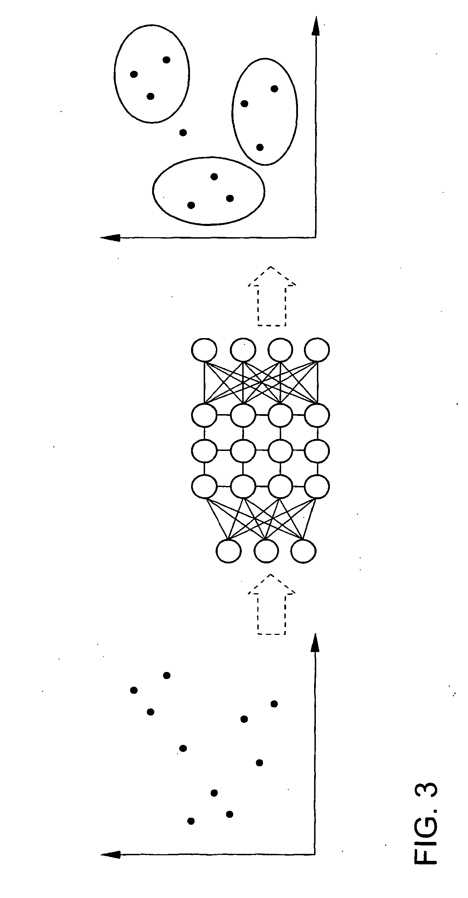

Fig. 3 verdeutlicht das Prinzip des bevorzugten Ausführungsbeispiels der vorliegenden Erfindung. Im linken Figurenteil sind einzelne Ereignisse durch Kreise dargestellt. Bei der bisherigen Diagnose von Fehlern wird für jedes der Ereignisse eine eigene Ursache vermutet. Im mittleren Figurenteil ist ein neuronales Netz dargestellt, von dem Ereigniscluster gebildet werden, die im rechten Figurenteil dargestellt sind. Diejenigen Ereignisse, die innerhalb eines der Ovale liegen, gehören zu einem gemeinsamen Ereigniscluster. Anders als in Fig. 3 dargestellt, können auch mit demselben Ereignis verschiedene Ereigniscluster gebildet werden. Jedem der Ereigniscluster wird von dem neuronalen Netz eine Wahrscheinlichkeit dafür zugeordnet, dass sämtliche Ereignisse des Clusters eine gemeinsame Ursache haben. Beispielsweise ist die Wahrscheinlichkeit für das rechts oben im rechten Figurenteil dargestellte Cluster so groß, dass eine gemeinsame Ursache angenommen wird und dementsprechend versucht wird, einen einzigen Funktionsfehler in dem Fahrzeug (die gemeinsame Ursache) zu beheben. Dagegen ist die Wahrscheinlichkeit für eine gemeinsame Ursache für die anderen beiden dargestellten Cluster , zu gering.

Das neuronale Netz kann als Eingangsdaten insbesondere von einer Vorverarbeitung erzeugte binäre Vektoren erhalten und in zwei Phasen, der Lernphase und der Auswertephase verarbeiten. In der Lernphase werden die Vektoren, die einen Eingaberaum definieren, bezüglich möglicher Ereigniscluster untersucht. Die Ereigniscluster, die von dem neuronalen Netz gebildet werden, können mehrere Ereignisgruppen enthalten. Am Ende der Lernphase ist das Wissen über die Ereigniscluster in Form von Gewichten im neuronalen Netz verteilt gespeichert bzw. vorhanden.

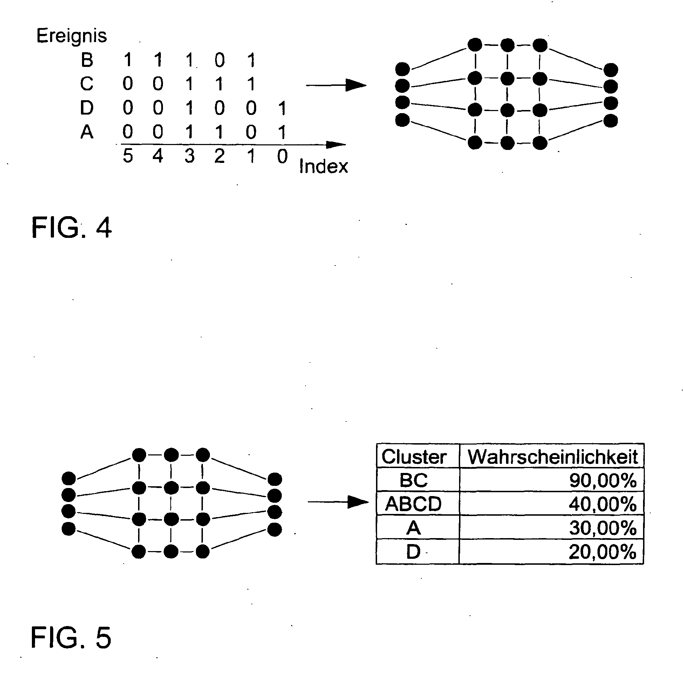

Fig. 4 stellt im linken Figurenteil die Vektoren dar, die - wie mit einem nach rechts weisenden Pfeil verdeutlicht ist - in das neuronale Netz als Eingangsinformationen übernommen werden. Jede in der Vorarbeitung gebildete Ereignisgruppe wird durch einen binären Vektor beschrieben (in der Fig. 4 als Spalte von Zahlenwerten "0" oder "1" dargestellt). Jede Ereignis-Art hat eine definierte Position in den binären Vektoren. Im Beispiel haben die Positionen der Ereignis-Arten im Vektor die Reihenfolge B C D A. Falls das Ereignis in der Ereignisgruppe vorhanden ist, wird eine 1 an der Position des Ereignisses im binären Vektor eingetragen. Falls das Ereignis nicht in der Ereignisgruppe vorhanden ist, wird eine 0 an der Position des Ereignisses im binären Vektor eingetragen. Unterhalb des langen nach rechts weisenden Pfeils ist der Index (Ordnungsnummer) der Vektoren von rechts nach links aufsteigend aufgetragen.

Da die Anzahl der im Fahrzeug auftretenden unterschiedlichen Arten von Ereignissen nicht im Vorhinein bestimmt werden kann, muss das Format (Anzahl der binären Elemente) des binären Vektors mit dem ersten Auftreten einer Art von Ereignissen erweitert werden oder erst nach der Feststellung, welche Ereignisarten aufgetreten sind, erstellt werden. Daher weist der Vektor mit der Ordnungsnummer 0 lediglich zwei Einträge auf: für Ereignis-Art A und D.

In der Auswertephase werden die Gewichte des neuronalen Netzes untersucht und die durch die Gewichte gegebenen Informationen über Ereigniscluster z. B. in Form einer Tabelle ausgegeben. Die Tabelle enthält für die möglichen Ereigniscluster jeweils die ermittelte Wahrscheinlichkeit. Bei der Auswertung handelt es sich insbesondere um eine statistische Untersuchung der Häufigkeit des gemeinsamen Auftretens gleicher Ereignisse. Fig. 5 zeigt dem linken Figurenteil wiederum das neuronale Netz und im rechten Figurenteil die Tabelle für ein Beispiel. Die Wahrscheinlichkeit der Ereignis-Arten B und C erscheint mit 90 % hoch genug um eine gemeinsame Ursache annehmen zu können. Bei dem theoretischen Wert von 100 % bestünde vollständige Sicherheit. Dagegen erscheinen die Wahrscheinlichkeit für die anderen Ereigniscluster zu gering.

Für die Bildung der Ereigniscluster können z. B. selbstorganisierende Karten (SOM) bzw. äquivalente Strukturen verwendet werden, die für sich genommen bereits bekannt sind. Die Struktur eine Mehrzahl von Neuronen (oder "Knoten") auf, welche ein neuronales Netz bilden. Es ist eine Nachbarschaftsbeziehung zwischen den Knoten definiert. Jeder der Knoten besitzt einen zufällig initialisierten Gewichtsvektor (Array von Gewichten) von der Dimensionalität des Eingaberaums. Während der Lernphase werden die hochdimensionalen Eingabevektoren in zufälliger Reihenfolge dem Netz präsentiert. Für jeden Knoten wird eine Aktivierung entsprechend einer Aktivierungsfunktion (z.B. Euklidische Distanz) berechnet und jener Knoten mit der höchsten Aktivierung (d.h. geringste Euklidische Distanz) als Ergebnis ("Winner") ausgewählt. In der Auswertephase werden dann die möglichen Eingabevektoren in das neuronale Netz eingegeben und der Aktivierungswert des Gewinnerneurons erfasst. Dabei werden die Gewichtsvektoren des Winners und seiner Nachbarknoten innerhalb der Netztopologie einer monoton fallenden Lernrate folgend dahingehend verändert, dass sie dem angelegten Eingabevektor ähnlicher werden. Dies führt letztendlich dazu, dass benachbarte Vektoren aus dem Eingaberaum auf benachbarte Knoten abgebildet werden, d.h. es entsteht eine topologieerhaltende Abbildung. Die Eingabevektoren mit der höchsten Aktivierung entsprechen mit einer hohen Wahrscheinlichkeit einem Cluster.

Ein Problem beim Einsatz der SOM ist die Größe des Eingaberaumes. Aus den möglichen Ereignissen in einem Fahrzeug ergibt sich eine große Anzahl von möglichen Ereignisclustern. Da bei den SOM jeder Cluster durch ein Neuron einer so genannten zweidimensionalen Kohonenschicht repräsentiert wird, erfordert der große Eingaberaum sehr viele Neuronen. Die Kohonenschicht ist die Verarbeitungsschicht der selbstorganisierenden Karten. Jedes Neuron der Kohonenschicht repräsentiert ein Eingabemuster und ist mit allen Eingabeneuronen über gewichtete Verbindungen verbunden.

Die große Anzahl der Neuronen würde die Ressourcen einer Auswertungseinrichtung in dem Fahrzeug erschöpfen. Zudem ist für das Funktionieren der SOM eine Vorinitialisierung der Gewichte in der Kohonenschicht notwendig. Dadurch wird versucht, den Eingaberaum topologisch auf den Neuronen der Kohonenschicht zu verteilen, um eine bessere Verteilung der Eingabevektoren zu erreichen. Daher ist ein dynamisches Aufbauen des neuronalen Netzes nicht möglich. Dynamisches Aufbauen bedeutet, dass Neuronen in Abhängigkeit von der Veränderung der Dimensionen des Eingaberaumes hinzugefügt werden, d.h. ein Neuron des Neuronalen Netzes wird erst bei Bedarf in der Lernphase erstellt. Dies erfolgt im Gegensatz zu dem Fall, dass ein Kontingent von Neuronen während der Definition des Netzes angelegt wird (statisches Anlegen der Neuronen).

Das dynamische Aufbauen erscheint aber als einzige praktikable Alternative im Hinblick auf die beschränkten Ressourcen auf der Zielhardware und der Größe des Eingaberaumes. Um das dynamische Aufbauen des Neuronalen Netzes zu ermöglichen, ist eine angepasste SOM bzw. Struktur entwickelt worden. Diese wird in dem folgenden Abschnitt erklärt.

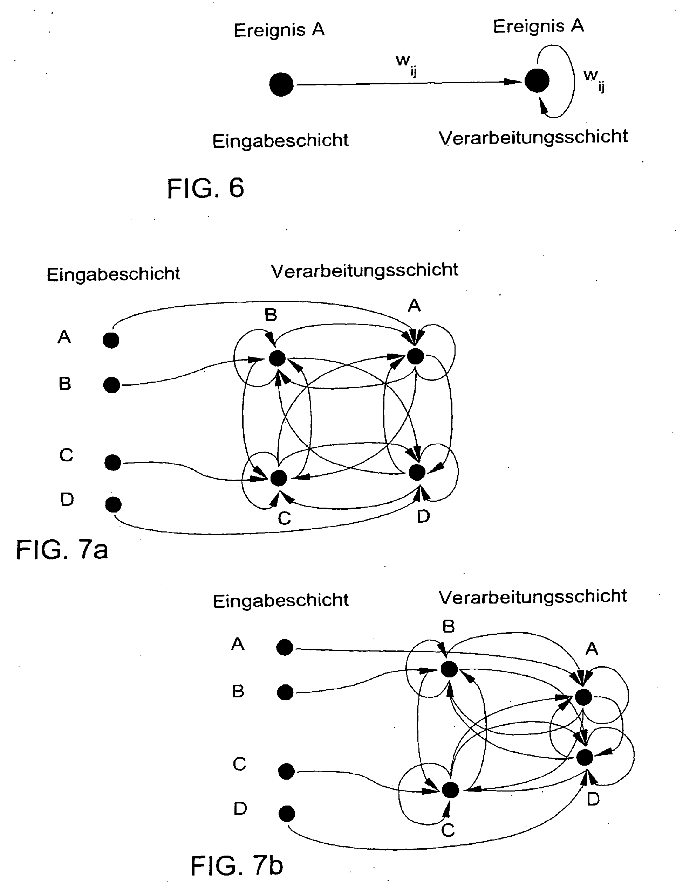

Das neuronale Netz besteht aus einer Eingabeschicht und einer Verarbeitungsschicht. Dabei ist jedes Neuron der Eingabeschicht mit genau einem Neuron der Verarbeitungsschicht über eine gerichtete und gewichtete Verbindung verbunden (Fig. 6). Zudem wird für jedes Neuron der Verarbeitungsschicht eine gewichtete direkte Rückkopplung auf sich selbst definiert. Fig. 6 zeigt das entsprechende Neuronenpaar der Eingabeschicht und der Verarbeitungsschicht für die Ereignis-Art A. Die Neuronen sind durch Kreise dargestellt, die zugeordneten Gewichte (Gewicht des Paars und Rückkopplungs-Gewicht des Neurons der Verarbeitungsschicht) jeweils mit $w_{ij}$.

Daraus folgt, dass das neuronale Netz nur so viele Neuronenpaare enthalten muss, wie Ereignisse aufgetreten sind. Die Neuronenpaare werden vorzugsweise beim ersten Auftreten einer Ereignis-Art angelegt und verbleiben z. B. während des gesamten Lebenszyklus eines Fahrzeugs im Fahrzeug-Modul oder z. B. während des gesamten Lebenszyklus einer Fahrzeugserie in dem Server-Modul gespeichert.

In Fig. 7A ist ein neuronales Netz für vier aufgetretene Ereignis-Arten dargestellt. Aus den Pfeilen der Darstellung kann entnommen werden, dass alle Neuronen der Verarbeitungsschicht jeweils paarweise miteinander gekoppelt sind. Entsprechende Gewichte für jedes der Paare und für die Rückkopplung der Neuronen auf sich selbst sind definiert. Dabei repräsentieren die Gewichte der Kopplungen zwischen den Neuronen der Verarbeitungsschicht die topologische Entfernung zwischen den Neuronen (Ereignis-Arten) auf einem mehrdimensionalen Gitter. Die Gewichte der Paare sind durch ihre Abstände zueinander dargestellt. Je geringer die Gewichte sind, desto näher ist der Abstand und desto höher ist die Wahrscheinlichkeit, dass die beiden Ereignis-Arten eine gemeinsame Ursache haben. Die Gewichte der direkten Rückkopplung repräsentieren dabei die Entfernung der Neuronen jeweils zu sich selbst, wobei diese Entfernung nicht aus Fig. 7 erkennbar ist.

Das neuronale Netz weist somit drei zu unterscheidende Kopplungsarten auf. Die erste Kopplungsart betrifft die Verbindungen von dem jeweiligen Neuron der Eingabeschicht zu dem Neuron der Verarbeitungsschicht (für dieselbe Ereignis-Art). Bei einer besonders bevorzugten Ausgestaltung können die Werte der Gewichte dieser Verbindungen 0 oder 1 sein. Die zweite Kopplungsart betrifft die Kopplung der Neuronen-Paare in der Verarbeitungsschicht. Die Werte der Gewichte dieser Verbindungen können bei der Ausgestaltung positive reelle Zahlen zwischen 0 und 1 sein. Die dritte Kopplungsart betrifft die direkten Rückkopplungen der Neuronen der Verarbeitungssicht. Die Werte der Gewichte dieser Verbindungen können bei der Ausgestaltung ebenfalls positive reelle Zahlen zwischen 0 und 1 sein.

Im Folgenden wird die besonders bevorzugte Ausgestaltung näher beschrieben: Eine Propagierungsfunktion $net_j$ für das Neuron j der Verarbeitungsschicht ist wie folgt definiert:

$$\text{Gleichung 1:} \qquad net_j = x_{ej} * w_{ej}$$

Dabei ist $X_{ej}$ die Aktivierung des Neurons, welches mit dem Neuron j der Verarbeitungsschicht über eine gewichtete Verbindung mit dem Gewicht Wej verbunden ist.

Die folgenden Details beziehen sich auf die Verarbeitungsschicht und die Neuronen dieser Schicht. Die Neuronen der Eingabeschicht sind von der folgenden Beschreibung nicht betroffen, da diese direkt aktiviert werden.

Die Aktivierungsfunktion $a_j$ für das Neuron j der Verarbeitungsschicht ist wie folgt definiert: die Aktivierungsfunktion ist gleich der Propagierungsfunktion $net_j$, falls $net_j$ größer als ein Schwellenwert ist, der für das Neuron j definiert ist. Andernfalls ist aj = 0. Der Schwellenwert ermöglicht somit das gezielte Sperren einzelner Neuronen der Verarbeitungsschicht.

Das Lernen des neuronalen Netzes beruht auf der Änderung der (topologischen) Entfernung (d. h. der Gewichte) zwischen den Neuronen der Verarbeitungsschicht. In Fig. 7B sind die Neuronen der Verarbeitungsschicht gemäß Fig. 7A dargestellt, wobei jedoch durch das Aktivieren der Eingabeneuronen der Ereignisse A und D ausgelöst die Gewichte verändert und damit die Abstände im neuronalen Netz verändert wurden. Die Regeln für die Veränderungen sind insbesondere wie folgt:

1. Sind zwei Neuronen der Verarbeitungsschicht durch die Anregung der entsprechenden Neuronen der Eingabeschicht aktiviert worden, kommen sie sich topologisch näher. Dabei werden die Gewichte der Kopplungen zwischen diesen Neuronen dekrementiert (erniedrigt). Gleichzeitig entfernen sich die aktivierten Neuronen von sich selbst und anderen nicht aktivierten Neuronen der Verarbeitungsschicht, indem das Gewicht der direkten Rückkopplung und die Gewichte der Verbindungen zu den nicht aktivierten Neuronen inkrementiert (vergrößert) werden.

2. Wurde nur ein Neuron der Verarbeitungsschicht aktiviert, so nähert es sich nur sich selbst. Dabei wird das Gewicht der direkten Rückkopplung dekrementiert. Gleichzeitig entfernt es sich von den anderen Neuronen der Verarbeitungsschicht, indem die Gewichte der entsprechenden Paar-Kopplungen inkrementiert werden.

Ferner kann eine Lernrate definiert werden, durch die die Intensität der Änderung von Gewichten bestimmt wird. Die Lernrate kann zur unterschiedlichen Konfiguration eines neuronalen Netzes im Fahrzeug-Modul und eines neuronalen Netzes im Server-Modul genutzt werden. Da das neuronale Netz des Fahrzeug-Moduls nur wenige Daten zum Lernen erhält, muss die Lernrate entsprechend hoch angesetzt werden, damit sich ein Lerneffekt beim neuronalen Netz einstellt. Im Gegensatz dazu wird das neuronale Netz des Server-Moduls mit sehr vielen Daten versorgt, so ist es bei diesem Neuronalen Netz erwünscht, langsamer zu lernen, um nicht durch seltene abweichenden Daten im Ergebnis gestört zu werden.

Die Informationen aus zwei verschiedenen neuronalen Netzen, die beispielsweise Fahrzeuge desselben Typs betreffen können, werden vorzugsweise wie folgt zusammengefügt, d.h. die neuronale Netze werden "verschmolzen"; Die einzelnen Neuronen der Verarbeitungsschicht aus dem Quellnetz (eines der Netze) werden in das Zielnetz (das andere der Netze) hinzugefügt oder verschmelzen dabei mit den vorhandenen gleichen Neuronen (gleiches Ereignis). Zunächst werden alle im Zielnetz nicht vorhandenen Neuronen des Quellnetzes erzeugt und vollständig mit allen anderen Neuronen des Zielnetzes verbunden (verkoppelt). Danach werden die Gewichte der Verbindungen zwischen den neuen Neuronen aus dem Quellnetz übernommen. Die Verbindungen, die durch die Gewichte der Verbindungen des Quellnetzes nicht belegt werden, da sie im Quellnetz nicht vorhanden waren, werden mit 1 belegt. Die Gewichte der Verbindungen zwischen den neuen Eingabeneuronen und den Verarbeitungsneuronen werden beim Einspielen eines neuronalen Netzes, z. B. aus den Fahrzeug-Modulen in das Neuronale Netz des Server-Moduls, auf 1 gesetzt. Beim Einspielen eines Teils des neuronalen Netzes des Server-Moduls in das neuronale Netz des Fahrzeug-Moduls werden die Gewichte der Verbindungen zwischen den neuen Eingabeneuronen und den Verarbeitungsneuronen auf 0 gesetzt. Dies soll verhindern, dass bei der Auswertung des neuronalen Netzes im Fahrzeug-Modul die Neuronen ausgewertet werden, die noch gar nicht im Fahrzeug aufgetreten sind. Treten sie im weiteren Verlauf im Fahrzeug auf, so werden diese Gewichte auf 1 gesetzt, damit bei der nächsten Auswertung auch diese Ereignisse berücksichtigt werden können.

Nachdem die nicht vorhandenen Neuronen eingespielt worden sind, werden die vorhandenen Neuronen eingespielt, indem die Gewichte der Neuronen angepasst werden. Dabei werden die einzelnen Gewichte der Neuronen im Zielnetz den Gewichten der Neuronen aus dem Quellnetz angenähert.

In der Auswertephase (unabhängig davon, ob vorher eine Verschmelzung von mehreren neuronalen Netzen stattgefunden hat) werden die ermittelten Gewichte des neuronalen Netzes ausgewertet. Die Auswertung wird mittels eines Algorithmus durchgeführt, welcher im Folgenden beschrieben wird.

Für die Auswertephase werden die Propagierungsfunktion, die Aktivierungsfunktion und die Ausgabefunktion der Neuronen der Verarbeitungsschicht angepasst. Dadurch wird die richtige Aktivierung der Verarbeitungsneuronen bei der Anregung durch die Eingabeneuronen gewährleistet.

Die Propagierungsfunktion hat die Aufgabe zwischen einer Erregung durch das Eingabeneuron und einer Erregung durch ein anderes Verarbeitungsneuron zu unterscheiden. Um dies zu realisieren wird die Propagierungsfunktion für jedes Neuron j der Verarbeitungsschicht wie folgt definiert:

- Die Propagierungsfunktion $net_j$ ist gleich wdr * Wej falls $X_{ej}$ = 1.
- $net_j$ = Wej, falls $X_{ej}$ < 0.
- $net_j$ = 0 in allen anderen Fällen.

$w_{dr}$ ist dabei das Gewicht der direkten Rückkopplung. $w_{ej}$ ist das Gewicht der Kopplung des Eingabeneuron e zum Verarbeitungsneuron j. $X_{ej}$ ist die Aktivierung des Eingabeneurons e.

Die Ausgabe konvertiert die Aktivierungen $a_j$ der Neuronen in eine verwertbare und interpretierbare Darstellung. Die Ausgabefunktion $o_j$ ist wie folgt definiert:

- $o_j$ = (1 - $a_j$) * 100, falls $a_j$ > 0.
- $o_j$ = (1 + $a_j$) * (-100), falls $a_j$ < 0.
- $o_j$ = 0 in allen anderen Fällen.

Es werden nacheinander alle Neuronen der Eingabeschicht genau ein Mal aktiviert. Nach jeder Aktivierung werden die Aktivierungen der Neuronen der Verarbeitungsschicht ausgelesen. Die Werte der Aktivierung sind reelle Zahlen von 0 bis 100 und repräsentieren die Wahrscheinlichkeit einer Zugehörigkeit des entsprechenden Ereignisses zu einem Ereigniscluster. Anschließend werden vom Algorithmus, auf Basis einer Bereichstabelle, die den aktivierten Neuronen zugehörigen Ereignisse entsprechend ihrer Aktivierung den in der Tabelle definierten Bereichen zugeordnet. Die Bereichstabelle weist beispielsweise sieben Bereiche auf, die sich jeweils von einem ersten Wahrscheinlichkeitswert bis zu einem 10 Prozent niedrigeren zweiten Wahrscheinlichkeitswert erstrecken. Z. B. erstreckt sich Bereich 1 von 100 % zu 90 %, Bereich 2 von 90 % zu 80 % usw.

in einem konkreten Beispiel wird angenommen, dass ein neuronales Netz vier Eingabeneuronen A, B, C und D aufweist und vier zugeordnete Verarbeitungsneuronen A, B, C und D existieren. Beim Aktivieren des Eingabeneurons Sicht des Ereignisses A, nachdem die Gewichte in der Lernphase angelernt wurden, ergeben sich die folgenden Ergebnisse der Verarbeitungsneuronen:

- A: Aktivierung = 0 %
- B: Aktivierung = 94 %
- C: Aktivierung = 90 %
- D: Aktivierung = 20 %

Die Werte die Aktivierung werden wie folgt gedeutet:

- Das Ereignis A bildet mit einer Wahrscheinlichkeit von 0% kein eigenes Ereigniscluster.
- Das Ereignis B ist mit einer Wahrscheinlichkeit von 94% in dem gleichen Ereigniscluster wie das Ereignis A.
- Das Ereignis C ist mit einer Wahrscheinlichkeit von 90% in dem gleichen Ereigniscluster wie das Ereignis A.
- Das Ereignis D ist mit einer Wahrscheinlichkeit von 20% in dem gleichen Ereigniscluster wie das Ereignis A.

Aus den zuvor aufgelisteten Ergebnissen bildet der Auswertungs-Algorithmus nach der Aktivierung des Eingabeneurons A die im Folgenden angegebenen Ereigniscluster. Aufgrund der definierten Bereichstabelle ist das Ereignis A in beiden Ereignisclustern enthalten:

- Ereigniscluster mit den Ereignis-Arten A, B, C: Wahrscheinlichkeit 92 %
- Ereigniscluster mit den Ereignis-Arten A, D: Wahrscheinlichkeit 20 %

Bei der Bildung der Ereigniscluster werden insbesondere diejenigen Ereignisse zu einem Ereigniscluster zusammengefasst, die durch den Wert der Aktivierung ihres Neurons dem gleichen Bereich (z. B. Bereich 1) zugeordnet werden können. Dabei kann ein Ereignis mehreren Bereichen zugeordnet werden, da sich diese überschneiden können. Durch die Gruppierung der Ereignisse mit verschiedenen Wahrscheinlichkeiten wird die gemeinsame Wahrscheinlichkeit des Ereignisclusters, aus den einzelnen Wahrscheinlichkeiten ausgerechnet. Diese wird durch folgende Vorschrift berechnet: die Wahrscheinlichkeit für das Ereigniscluster ist gleich der Summe der Wahrscheinlichkeiten der Ereignis-Arten für die Zugehörigkeit zu dem Ereigniscluster geteilt durch die Anzahl der summierten Wahrscheinlichkeiten für die Zugehörigkeit.

Nachdem alle Ereignisse den definierten Bereichen zugeordnet wurden und die Wahrscheinlichkeiten der so entstandenen Ereigniscluster berechnet wurden, folgt die Deaktivierung des Eingabeneurons des Ereignisses A und die Aktivierung des Eingabeneurons des Ereignisses B. Dabei werden die Ereigniscluster nach der gleichen Vorgehensweise wie zuvor beschrieben gebildet. Da sich aus der Sicht des Neurons B auch ein Ereigniscluster B, A, C bilden kann, jedoch mit einer anderen Wahrscheinlichkeit als das zuvor gebildete Ereigniscluster A, B, C, erfolgt für die Ermittlung der Gesamt-Wahrscheinlichkeit des Ereignisclusters durch die Berechnung des Durchschnittwerts der beiden Wahrscheinlichkeiten.

Nachdem eine Auswertung aus der Sicht aller vier Ereignisse vorgenommen wurde, ergibt sich z. B. folgendes Ergebnis der Ereignisclusteranalyse.

- Ereigniscluster mit den Ereignis-Arten A, B, C: Wahrscheinlichkeit 95 %
- Ereigniscluster mit den Ereignis-Arten A, D: Wahrscheinlichkeit 45 %

Aus der Sicht der Ereignisse B und C hat sich in dem Beispiel herausgestellt, dass die Wahrscheinlichkeit einer Zugehörigkeit zu einem gemeinsamen Ereigniscluster mit A höher ist als die Wahrscheinlichkeit aus der Sicht des Ereignisses A. Zudem ist bei der Auswertung aus der Sicht des Ereignisses D eine Zusammengehörigkeit mit dem Ereignis A zu einem gemeinsamen Ereigniscluster mit einer Wahrscheinlichkeit von 70% ermittelt worden. Daraus ergibt sich die endgültige Wahrscheinlichkeit für das Ereigniscluster A, D von 45%.

Das erhaltene Ergebnis kann jetzt von den bestehenden Diagnoseanwendungen als Basis genutzt werden, um die Anzahl der Arbeitsschritte zum Beispiel bei der Behebung eines gemeinsamen Fehlers zu reduzieren. In dem Beispiel konnte die Anzahl der Arbeitsschritte von 4 auf 2 reduziert werden.

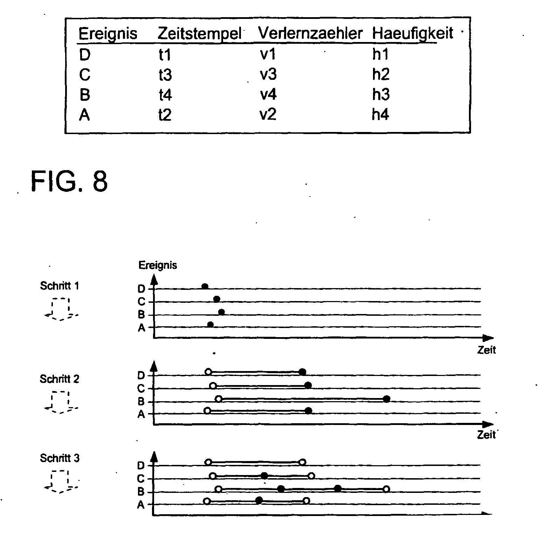

Ein Beispiel für die Gruppierung von Ereignissen gemäß ihrer zeitlichen Nähe ist in den Figuren 8 bis 10 dargestellt.

Fig. 8 zeigt die in einem Ereignisspeicher oder einer Kombination von Ereignisspeichern gespeicherten Informationen. Beispielsweise werden verschiedene Ereignisspeicher wiederholt, insbesondere zyklisch nacheinander, ausgelesen. Dabei kann jeder der Ereignisspeicher einem Steuergerät des Fahrzeugs zugeordnet sein.

In der ersten Spalte der Tabelle gemäß Fig. 8 sind vier verschiedene Arten von Ereignissen mit einem Kennbuchstaben A, B, C, D bezeichnet. Im Allgemeinen können hier beliebig viele verschiedenartige Ereignisse eingetragen sein, insbesondere so viele verschiedenartige Ereignisse wie in dem Fahrzeug während einer Betriebsphase (z. B. zwischen zwei routinemäßigen Werkstattbesuchen) vorgekommen sind oder so viele wie bei einer Diagnose ausgelesen werden.

In der zweiten Spalte ist ein Zeitstempel (z. B. ein Zeitwert oder ein Kilometerstand) des ersten Auftretens der Ereignis-Art eingetragen.

In der dritten Spalte ist der Wert eines Zählers, z. B. des so genannten "Verlernzählers" (s. o.) eingetragen, der verwendet werden kann, um das letzte Auftreten der Ereignis-Art zu ermitteln oder abzuschätzen.

In der vierten Spalte ist die Gesamt-Häufigkeit des Auftretens der Ereignis-Art eingetragen.

Die Tabelle dient lediglich der Veranschaulichung der erhältlichen Informationen. Die Informationen müssen nicht auf diese Art dargestellt oder gar visualisiert werden. Vielmehr kann die Verknüpfung zwischen der Ereignis-Art und den zugeordneten Informationen (z. B. Zeitstempel, Verlernzähler-Wert und Häufigkeit) auf jede andere mögliche Weise hergestellt werden, beispielsweise durch Software, in der ein entsprechendes Daten-Array definiert ist.

Außerdem können bei alternativen Ausgestaltungen andere Informationen zu der jeweiligen Ereignis-Art abgespeichert sein, als die in Fig. 8 dargestellten. Zum Beispiel könnte unmittelbar das mittlere Zeitintervall zwischen den einzelnen Auftrittszeitpunkten der Ereignis-Art abgespeichert sein. In diesem Fall könnte auf den Verlernzähler-Wert und die Häufigkeit verzichtet werden. Die Häufigkeit könnte im Nachhinein wiederum ermittelt werden, wenn das Ende des Beobachtungszeitraums erreicht ist darauf z. B. beim Auslesen der Daten. Auch ist es denkbar, wenn Datenspeicher-Kapazität im Fahrzeug günstiger wird und daher eine größere Kapazität zur Verfügung steht, den Zeitstempel jedes Auftretens eines Ereignisses abzuspeichern.

In Fig. 9 sind vier Schritte der Aufbereitung und Gruppierung von Ereignissen, z. B. der Ereignisse gemäß Fig. 8 dargestellt. Jeder Schritt entspricht einem Diagramm, auf dessen horizontaler Achse die Zeit oder eine entsprechende Größe (wie Kilometerstand) des Auftretens der Ereignisse aufgetragen ist und auf dessen vertikaler Achse die einzelnen vorkommenden Ereignis-Arten aufgetragen sind. Die aufgetretenen Ereignisse sind durch einen Kreis dargestellt.

In Schritt 1 wird für jede Ereignis-Art der Zeitpunkt des ersten Auftretens der Ereignis-Art ermittelt. In Schritt 2, der mit Schritt 1 vertauscht werden kann oder gleichzeitig ausgeführt werden kann, wird für jede Ereignis-Art der Zeitpunkt des letzten Auftretens der Ereignis-Art ermittelt. In dem zweiten Diagramm von oben sind der Zeitpunkt des ersten Auftretens und der Zeitpunkt des zweiten Auftretens jeweils durch eine horizontale Linie miteinander verbunden. In anderen Fällen als dem dargestellten kann eine Ereignis-Art auch nur ein Mal auftreten.

In dem folgenden Schritt 3 wird die Häufigkeit der Ereignis-Arten ermittelt und werden die einzelnen Ereignisse der Ereignis-Art einem Wert auf der Zeitachse zugeordnet. Insbesondere können die Ereignisse derselben Ereignis-Art, wie oben beschrieben, zwischen dem Zeitpunkt des letzten Auftretens und dem Zeitpunkt des ersten Auftretens gleichmäßig verteilt werden. Es ist jedoch auch möglich eine andere Verteilung zwischen dem ersten Auftreten und dem zweiten Auftreten vorzunehmen, beispielsweise wenn weitere Informationen zur Verfügung stehen, z. B. einzelne oder mehrere Zeitstempel der aufgetretenen Ereignisse.

An Stelle diskreter Zeitpunkte können auch für das Auftreten einzelner, mehrerer oder aller Ereignisse Zeitintervalle definiert sein oder ermittelt werden. In diesem Fall kann optional außerdem ermittelt werden oder festgelegt werden, zu welchem Zeitpunkt in dem jeweiligen Zeitintervall das Ereignis aufgetreten ist. Es ist jedoch auch möglich, insbesondere wenn die Zeitintervalle im Vergleich zu den Zeitabständen des Auftretens der Ereignisse kurz sind, eine Gruppierung lediglich auf Basis der Zeitintervalle vorzunehmen und dem Ereignis keinen diskreten Zeitpunkt zuzuordnen.

In dem dritten Diagramm von oben (in Fig. 9) sind die gleichmäßig verteilten Ereignisse dargestellt.

In dem folgenden Schritt 4 werden die Ereignisse in Ereignisgruppen gruppiert, wobei z. B. eine maximale Zeitspanne (oder Intervall des Kilometerstandes) definiert ist, innerhalb der alle Ereignisse derselben Ereignisgruppe aufgetreten sein müssen.

In dem vierten Diagramm von oben sind die Ergebnisse der Gruppierung erkennbar. Fig. 10 stellt das Ergebnis in Tabellenform dar. In der linken Spalte sind (pro Zeile, d. h. pro Ereignisgruppe) die in einer bestimmten Ereignisgruppe aufgetretenen Ereignis-Arten durch ihren Kennbuchstaben A, B, C, D bezeichnet. In der rechten Spalte steht ein entsprechender "transformierter" Zeitstempel T1 bis T6 der jeweiligen Ereignisgruppe. Beispielsweise kann ein Zeitwert der Gruppe als transformierter Zeitstempel angegeben werden. Der Zeitwert ist z. B. der frühste oder späteste Zeitpunkt des Auftretens eines der Ereignisse in der Gruppe, oder ein Mittelwert der Zeitpunkte aller Ereignisse der Gruppe.

## Patentansprüche

1. Verfahren zum Auswerten von Ereignissen, die beim Betrieb zumindest eines Fahrzeuges, insbesondere eines Straßen-Kraftfahrzeuges, ermittelt und/oder aufgezeichnet werden, wobei

- eine Vielzahl der Ereignisse ermittelt wird, wobei die Ereignisse von unterschiedlicher Art (A, B, C, D) sind,
- durch Auswertung von Informationen über eine Historie der Ereignisse zumindest ein Ereigniscluster ermittelt wird, wobei das Ereigniscluster eine Mehrzahl der Ereignisse enthält und wobei das Ereigniscluster dadurch definiert ist, dass auf Grund der Auswertung eine Vermutung besteht, dass die dem jeweiligen Ereigniscluster angehörenden Ereignisse eine gemeinsame Ursache haben,
- jede Ereignis-Art durch ein Neuron in einem neuronalen Netz repräsentiert wird,
- Gewichte für Paare von Neuronen definiert werden, wobei die Gewichte eine Wahrscheinlichkeit für eine gemeinsame Ursache der beiden durch die Neuronen repräsentierten Ereignis-Arten ausdrücken,
- die Gewichte bei der Auswertung der Historie der Ereignisse angepasst werden,
- die Neuronen beim ersten Auftreten einer Ereignis-Art (A, B, C, D) angelegt werden.

2. Verfahren nach dem vorhergehenden Anspruch, wobei die Ereignisse bei der Auswertung zunächst einer Vorverarbeitung unterzogen werden und ein Ergebnis der Vorbearbeitung durch das neuronale Netz weiterverarbeitet wird.

3. Verfahren nach einem der vorhergehenden Ansprüche, wobei die Ereignisse bei der Auswertung zu Ereignisgruppen gruppiert werden, wobei die Ereignisgruppen jeweils ein oder mehrere Ereignisse aufweisen, die zeitlich, oder bezüglich einer anderen in Zeitrichtung geordneten Skala, näher beieinander aufgetreten sind als andere Kombinationen von Ereignissen.

4. Verfahren nach dem vorhergehenden Anspruch, wobei aus den Ereignisgruppen das oder die Ereigniscluster ermittelt werden.

5. Verfahren nach einem der vorhergehenden Ansprüche, wobei jeweils die Ereignisse, die beim Betrieb einer Mehrzahl von Fahrzeugen ermittelt werden, bei der Ermittlung des oder der Ereigniscluster berücksichtigt werden.

6. Anordnung zum Auswerten von Ereignissen, die beim Betrieb zumindest eines Fahrzeuges, insbesondere eines Straßen-Kraftfahrzeuges, ermittelt werden, wobei die Anordnung Folgendes aufweist:

   - eine Ermittlungseinrichtung (1) zur Ermittlung einer Vielzahl der Ereignisse, wobei die Ereignisse von unterschiedlicher Art (A, B, C, D) sein können,
   - eine Auswertungseinrichtung (2), die ausgestaltet ist,

   a) durch Auswertung von Informationen über eine Historie der Ereignisse zumindest ein Ereigniscluster zu ermitteln, wobei das Ereigniscluster eine Mehrzahl der Ereignisse enthält und wobei das Ereigniscluster dadurch definiert ist, dass auf Grund der Auswertung eine Vermutung besteht, dass die dem jeweiligen Ereigniscluster angehörenden Ereignisse eine gemeinsame Ursache haben,
   b) jede Ereignis-Art durch ein Neuron in einem neuronalen Netz zu repräsentieren,
   c) Gewichte für Paare von Neuronen zu definieren, wobei die Gewichte eine Wahrscheinlichkeit für eine gemeinsame Ursache der beiden durch die Neuronen repräsentierten Ereignis-Arten ausdrücken,
   d) die Gewichte bei der Auswertung der Historie der Ereignisse anzupassen,
   e) die Neuronen beim ersten Auftreten einer Ereignis-Art (A, B, C, D) anzulegen werden.

7. Anordnung nach dem vorhergehenden Anspruch, wobei die Ermittlungseinrichtung (1) mit einem Ereignisspeicher (E) verbunden ist, in dem die Ereignisse und Zusatzinformationen über die Historie speicherbar sind.

**Claims**

1. Method for the evaluation of events which are ascertained and/or recorded during the operation of at least one vehicle, particularly a road motor vehicle, wherein

   - a multiplicity of the events are ascertained, the events being of different type (A, B, C, D),
   - evaluation of information about a history of the events ascertains at least one event cluster, wherein the event cluster contains a plurality of the events and wherein the event cluster is defined in that on the basis of the evaluation there is a supposition that the events belonging to the respective event cluster have a common cause,
   - each event type is represented by a neuron in a neural network,
   - weights are defined for pairs of neurons, the weights expressing a probability of a common cause for the two event types represented by the neurons,
   - the weights are adapted when the history of the events is evaluated,
   - the neurons are created when an event type (A, B, C, D) first occurs.

2. Method according to the preceding claim, wherein the events are first of all subjected to preprocessing during the evaluation, and a result of the preprocessing is processed further by the neural network.

3. Method according to one of the preceding claims, wherein the events are grouped into event groups during the evaluation, wherein the event groups each have one or more events which have occurred closer together in time, or in respect of another scale organized in the direction of time, than other combinations of events.

4. Method according to the preceding claim, wherein the event groups are used to ascertain the event cluster or clusters.

**5.** Method according to one of the preceding claims, wherein the respective events which are ascertained during the operation of a plurality of vehicles are taken into account when ascertaining the event cluster or clusters.

**6.** Arrangement for the evaluation of events which are ascertained during the operation of at least one vehicle, particularly a road motor vehicle, wherein the arrangement has the following:

- an ascertainment device (1) for ascertaining a multiplicity of the events, the events being able to be of different type (A, B, C, D),
- an evaluation device (2) which is designed

a) to evaluate information about a history of the events in order to ascertain at least one event cluster, wherein the event cluster contains a plurality of the events and wherein the event cluster is defined in that on the basis of the evaluation there is a supposition that the events belonging to the respective event cluster have a common cause,
b) to represent each event type by a neuron in a neural network,
c) to define weights for pairs of neurons, the weights expressing a probability of a common cause for the two event types represented by the neurons,
d) to adapt the weights when the history of the events is evaluated,
e) to create the neurons when an event type (A, B, C, D) first occurs.

**7.** Arrangement according to the preceding claim, wherein the ascertainment device (1) is connected to an event memory (E) which can store the events and supplementary information about the history.

**Revendications**

**1.** Procédé d'évaluation d'événements qui sont déterminés et/ou affichés pendant le fonctionnement d'au moins un véhicule et en particulier d'un véhicule automobile routier, dans lequel

- plusieurs événements sont déterminés, les événements étant de natures (A, B, C, D) différentes,
- au moins un nuage d'événements est défini par évaluation d'informations concernant l'historique des événements, le nuage d'événements contenant plusieurs événements et le nuage d'événements étant défini par le fait que l'évaluation fait apparaître un soupçon que les événements qui appartiennent à chaque nuage d'événements ont une cause commune,
- chaque type d'événement est représenté par un neurone d'un réseau neural,
- des pondérations sont définies pour des paires de neurones, les pondérations exprimant la probabilité d'existence d'une cause commune aux deux types d'événements représentés par les neurones,
- lors de l'évaluation, les pondérations sont adaptées à l'historique des événements et
- les neurones sont appliqués lorsque le type d'événements (A, B, C, D) survient pour la première fois.

**2.** Procédé selon la revendication précédente, dans lequel les événements subissent d'abord un pré-traitement lors de l'évaluation et en ce qu'un résultat du pré-traitement est encore traité par le réseau neural.

**3.** Procédé selon l'une des revendications précédentes, dans lequel les événements sont groupés en groupes d'événements lors de l'évaluation, les groupes d'événements présentant tous un ou plusieurs événements qui sont survenus plus près l'un de l'autre dans le temps ou sur une autre échelle ordonnée dans le temps que d'autres combinaisons d'événements.

**4.** Procédé selon l'une des revendications précédentes, dans lequel le ou les nuages d'événements sont déterminés à partir des groupes d'événements.

**5.** Procédé selon l'une des revendications précédentes, dans lequel des événements qui ont été déterminés lors du fonctionnement de plusieurs véhicules sont pris en compte lors de la détermination du ou des nuages d'événements.

**6.** Agencement d'évaluation d'événements qui sont déterminés lors du fonctionnement d'au moins un véhicule et en particulier d'un véhicule automobile routier, l'agencement présentant :

- un dispositif de détermination (1) qui détermine plusieurs événements, les événements pouvant être de natures (A, B, C, D) différentes,
- un dispositif d'évaluation (2) configuré pour

a) définir au moins un nuage d'événements par évaluation d'informations concernant l'historique des événements, le nuage d'événements contenant plusieurs événements et le nuage d'événements étant défini par le fait que l'évaluation fait apparaître un soupçon que les événements qui appartiennent à chaque nuage d'événements ont une cause commune,
b) représenter chaque type d'événement par un neurone d'un réseau neural,
c) définir des pondérations pour des paires de neurones, les pondérations exprimant la probabilité d'existence d'une cause commune aux deux types d'événements représentés par les neurones,
d) lors de l'évaluation, adapter les pondérations à l'historique des événements et
e) appliquer les neurones lorsque le type d'événements (A, B, C, D) survient pour la première fois.

7. Agencement selon la revendication précédente, dans lequel le dispositif de détermination (1) est relié à une mémoire d'événements (E) dans laquelle les événements peuvent être conservés en mémoire ainsi que des informations supplémentaires concernant l'historique.

FIG. 1

FIG. 2

FIG. 3

Ereignis

| | | | | | | | |
|---|---|---|---|---|---|---|---|
| B | 1 | 1 | 1 | 0 | 1 | | |
| C | 0 | 0 | 1 | 1 | 1 | | |
| D | 0 | 0 | 1 | 0 | 0 | 1 | |
| A | 0 | 0 | 1 | 1 | 0 | 1 | |
| | 5 | 4 | 3 | 2 | 1 | 0 | Index |

# FIG. 4

| Cluster | Wahrscheinlichkeit |
|---------|--------------------|
| BC | 90,00% |
| ABCD | 40,00% |
| A | 30,00% |
| D | 20,00% |

# FIG. 5

Ereignis A                                    Ereignis A

$w_{ij}$                                      $w_{ij}$

Eingabeschicht                    Verarbeitungsschicht

## FIG. 6

Eingabeschicht              Verarbeitungsschicht

B                    A

A

B

C

D

## FIG. 7a

Eingabeschicht              Verarbeitungsschicht

B

A

A

B

C

D

## FIG. 7b

| Ereignis | Zeitstempel | Verlernzaehler | Haeufigkeit |
|----------|-------------|----------------|-------------|
| D | t1 | v1 | h1 |
| C | t3 | v3 | h2 |
| B | t4 | v4 | h3 |
| A | t2 | v2 | h4 |

# FIG. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20010002451 A1